# EUROPEAN PATENT APPLICATION

(11) **EP 4 207 114 A1**
(43) Date of publication of application: **05.07.2023**
(21) Application number: 20951560.0
(22) Date of filing: 31.08.2020
(51) Int. Cl.: G07D 7/0047

(54) **DATA GENERATION DEVICE, DATA GENERATION METHOD, AND DATA GENERATION PROGRAM**

(71) Applicant: Fujitsu Frontech Limited, Inagi-shi, Tokyo 206-8555 (JP)
(72) Inventor: KAMEI, Masami, Inagi-shi, Tokyo 206-8555 (JP); YOSHIMURA, Kazuhisa, Inagi-shi, Tokyo 206-8555 (JP)
(74) Representative: Haseltine Lake Kempner LLP
(86) International application number: PCT/JP2020/032826
(87) International publication number: WO 2022/044311

(57) **Abstract**

A data generation apparatus includes a separation unit, a character image acquisition unit, a background image acquisition unit, a pre-processing unit, an incorporation unit, and an output unit. The separation unit separates a serial number region and a background region from an original image of a paper currency that includes a serial number. The character image acquisition unit identifies each of characters included in the separated serial number region, and acquires a character image of each of the identified characters. The background image acquisition unit acquires a background image by complementing the serial number region in the separated background region. The pre-processing unit generates a serial number image by combining the acquired character images. The incorporation unit incorporates the generated serial number image at a position corresponding to the serial number image in the acquired background image. The output unit outputs image data in which the serial number that is combined by the pre-processing unit is associated with an incorporated image that is generated by the incorporation unit.

## Description

### Field

Embodiments of the present invention are related to a data generation apparatus, a data generation method, and a data generation program.

### Background

Conventionally, in the development of a paper currency identification apparatus for identifying characters that are printed on a paper currency, there is a need to prepare pieces of sample data of a large number of paper currencies to obtain an environment for checking identification accuracy and confirming an anti-counterfeiting effect or the like.

As a conventional technology for generating pieces of sample data of paper currencies as described above, a template file is arranged on all of pixels of visible image data and invisible image data while applying an arrangement rule of the template file. Further, an anti-counterfeiting printed matter generation method for generating data of a printed pattern portion to which characteristics of a gray level of pixel density of a image data to each of the pixels of the template file is known.

### Citation List

### Patent Literature

Patent Literature 1: Japanese Laid-open Patent Publication No. 2018-192729
Patent Literature 2: Japanese Laid-open Patent Publication No. 2018-163554

### Summary

### Technical Problem

However, the conventional technology as described above is to prepare sample data related to a print pattern. Therefore, if pieces of sample data related to a large number of paper currencies with different serial numbers are to be prepared, operation of preparing a piece of sample data for each of the serial numbers and associating a serial number that is a correct answer with each piece of the prepared sample data is needed, so that a large number of man-hours is needed, which is a problem.

According to one aspect, an object is to provide a data generation apparatus, a data generation method, and a data generation program capable of supporting development operation of a paper currency identification apparatus. Solution to Problem

According to an idea, a data generation apparatus includes a separation unit, a character image acquisition unit, a background image acquisition unit, a pre-processing unit, an incorporation unit, and an output unit. The separation unit separates a serial number region and a background region from an original image of a paper currency that includes a serial number. The character image acquisition unit identifies each of characters included in the separated serial number region, and acquires a character image of each of the identified characters. The background image acquisition unit acquires a background image by complementing the serial number region in the separated background region. The pre-processing unit generates a serial number image by combining the acquired character images. The incorporation unit incorporates the generated serial number image at a position corresponding to the serial number image in the acquired background image. The output unit outputs image data in which the serial number that is combined by the pre-processing unit is associated with an incorporated image that is generated by the incorporation unit.

### Advantageous Effects of Invention

It is possible to support development operation of a paper currency identification apparatus.

### Brief Description of Drawings

FIG. 1 is a block diagram illustrating a functional configuration example of a data generation apparatus according to an embodiment.
FIG. 2 is a flowchart illustrating an example of operation performed by the data generation apparatus according to the embodiment.
FIG. 3 is an explanatory diagram for explaining acquisition of background image data and character image data from original image data.
FIG. 4 is an explanatory diagram for explaining modification in a confirmation screen.
FIG. 5 is a flowchart illustrating an example of operation performed by the data generation apparatus according to the embodiment.
FIG. 6 is an explanatory diagram for explaining generated image data that is generated from the original image data.
FIG. 7 is an explanatory diagram for explaining a configuration example of a computer.

### Description of Embodiments

A data generation apparatus, a data generation method, and a data generation program according to an embodiment will be described below with reference to the drawings. In the embodiment, components having the same functions are denoted by the same reference symbols, and repeated explanation will be omitted. Meanwhile, the data generation apparatus, the data generation method, and the data generation program described in the embodiment below are illustrated by way of example, and do not limit embodiments. In addition, each of the embodiments below may be combined appropriately as long as there is no contradiction.

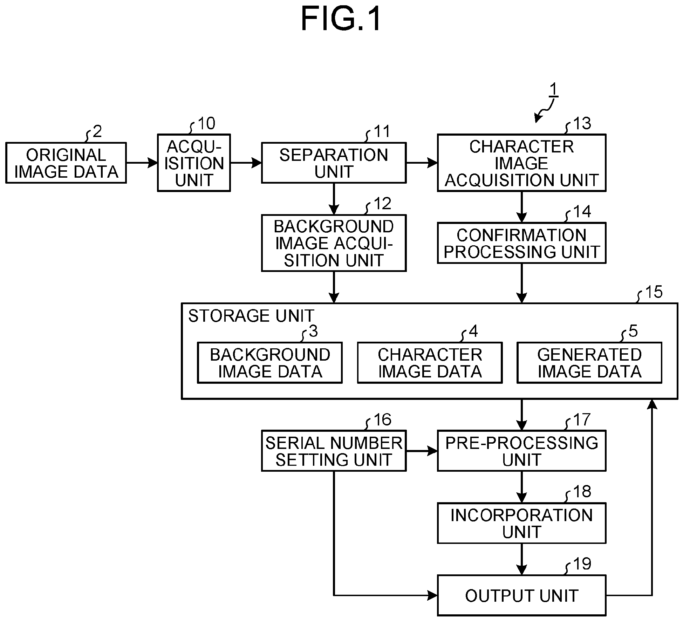

FIG. 1 is a block diagram illustrating a functional configuration example of a data generation apparatus according to an embodiment. As illustrated in FIG. 1, a data generation apparatus 1 includes an acquisition unit 10, a separation unit 11, a background image acquisition unit 12, a character image acquisition unit 13, a confirmation processing unit 14, a storage unit 15, a serial number setting unit 16, a pre-processing unit 17, an incorporation unit 18, and an output unit 19. For example, a personal computer (PC) may be applied as the data generation apparatus 1.

The acquisition unit 10 acquires original image data 2 related to a paper currency that includes a serial number. Specifically, the original image data 2 is image data that is obtained by reading, by a scanner or the like, a region including a serial number that is printed to distinguish an individual in the whole or a part of a paper currency. Meanwhile, it is assumed that the "paper currency" in the present embodiment includes government banknotes that are issued by governments, banknotes that are issued by banks, cash vouchers that are issued by private companies etc., and the like.

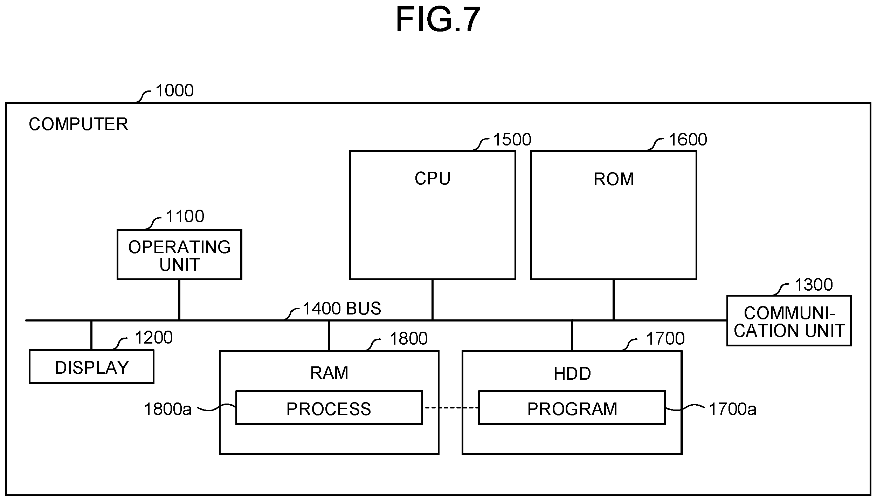

For example, the acquisition unit 10 acquires the original image data 2 that is read in advance by a scanner or the like, by reading from a storage medium, such as a semiconductor memory, or by performing communication with an external apparatus via a communication unit (see FIG. 7), for example. Subsequently, the acquisition unit 10 outputs the acquired original image data 2 to the separation unit 11.

The separation unit 11 is a processing unit that separates a serial number region and a background region from an original image of the paper currency that includes the serial number, with respect to the original image data 2 that is acquired by the acquisition unit 10.

Specifically, the separation unit 11 adopts the serial number region as a region of interest (ROI) on the basis of coordinates that are set in advance as the region including the serial number in the original image of the paper currency. Meanwhile, the separation unit 11 may adopt, as the region of interest, a serial number region that is identified from the original image of the paper currency by using a well-known image recognition technique. Subsequently, the separation unit 11 extracts the region of interest (serial number region) from the original image, and separates the extracted serial number region and the background region other than the serial number region. Then, the separation unit 11 outputs image data related to the serial number region to the character image acquisition unit 13, and outputs image data related to the background region to the background image acquisition unit 12.

The background image acquisition unit 12 is a processing unit that generates a background image by complementing the separated serial number region in the background region that is separated by the separation unit 11. Specifically, the background image acquisition unit 12 complements pixels of the serial number region from neighboring pixels of the extracted region of interest (serial number region) by using a well-known image completion technique with respect to the image data that is related to the background region and that is output by the separation unit 11.

Subsequently, the background image acquisition unit 12 stores background image data 3 in which the serial number region is complemented in the storage unit 15. Meanwhile, the background image acquisition unit 12 adds information on a position, a size, and the like of the serial number region as metadata to the background image data 3 when storing the background image data 3 in the storage unit 15.

The character image acquisition unit 13 is a processing unit that identifies each of characters that are included in the serial number region separated by the separation unit 11, and acquires a character image of each of the identified characters. Specifically, the character image acquisition unit 13 performs a well-known character recognition process on the image data that is related to the serial number region and that is output by the separation unit 11, and identifies each of the characters (for example, alphanumeric characters, such as A to Z and 0 to 1, Japanese characters, such as Hiragana) that are included in the serial number region. Subsequently, the character image acquisition unit 13 adopts the character image of each of the identified characters as character image data 4, and stores the character image data 4 in the storage unit 15.

For example, if a single character that is identified from the serial number region is "A", the character image acquisition unit 13 stores the character image that is identified as "A" in the character image data 4 with a file name of "A.dat" that corresponds to "A".

The confirmation processing unit 14 is a processing unit that displays a confirmation screen of the character image for each of the characters that are identified by the character image acquisition unit 13, and modifies the character image corresponding to the identified character on the basis of a modification instruction that is received in the confirmation screen from a user.

Specifically, the confirmation processing unit 14 reads the character image data 4 of each single character that is identified by the character image acquisition unit 13 and that is stored in the storage unit 15, and displays the read character image on the confirmation screen, such as a display. With the confirmation screen, the user is able to confirm whether the character image acquisition unit 13 has correctly identified the character image. Subsequently, the confirmation processing unit 14 receives, from the user, a modification instruction for designating the character image in the confirmation screen.

For example, it is assumed that a character image that needs to be identified as "C" has been identified as a character image of "A", and the character image of "C" is included in the character image data 4 with the file name of "A.dat" that corresponds to "A". In this case, the confirmation screen includes the character image of "C" in addition to the character image of "A". In this case, the user selects the character image of "C", and inputs a modification instruction for designating "C" by operation on a graphical user interface (GUI) on the confirmation screen, for example. The confirmation processing unit 14 modifies the character image corresponding to the identified character, on the basis of the modification instruction that is received as described above. For example, the confirmation processing unit 14 moves the character image of "C" that is included in the character image data 4 with "A.dat" to the character image data 4 with "C.dat" on the basis of the modification instruction as described above.

The storage unit 15 is, for example, a storage device, such as a semiconductor memory, and stores therein various kinds of data, such as the background image data 3, the character image data 4, and generated image data 5.

The serial number setting unit 16 is a processing unit that sets a serial number of image data of a paper currency to be generated (the generated image data 5). Specifically, the serial number setting unit 16 sets a serial number that is randomly generated, on the basis of a predetermined rule (for example, the number of digits of the serial number, a rule for combining alphabets and numerals, or the like) related to generation of the serial number. Further, the serial number setting unit 16 may set a serial number that is designated in advance by the user. The serial number setting unit 16 notifies the pre-processing unit 17 and the output unit 19 of the set serial number.

The pre-processing unit 17 is a processing unit that generates a serial number image by combining the character image of each of the characters that are acquired from the serial number included in the original image data 2, on the basis of the setting made by the serial number setting unit 16. Specifically, the pre-processing unit 17 reads, from the storage unit 15, the character image data 4 corresponding to the serial number, for each of characters of the serial number that is set by the serial number setting unit 16. Meanwhile, if the character image data 4 includes a plurality of identical character images, the pre-processing unit 17 may select and read an arbitrary character image or select and read a character image that meets a predetermined condition (for example, resolution).

Subsequently, the pre-processing unit 17 generates the serial number image by rearranging, in the same order as the serial number, the character images that are read for the respective characters of the serial number. Here, the pre-processing unit 17 may resize the character image of each of the characters by enlarging or reducing the size so as to meet a predetermined condition (for example, a size of the character or resolution). A condition for the resize may be set in advance by the user or may be set so as to match an average size of all of the characters such that all of the characters have the same sizes when the characters are rearranged in the same order as the serial number. Meanwhile, when the user sets the condition for the resize in advance, it may be possible to directly set a magnification ratio, a reduction ratio, or the like, or it may be possible to set an arbitrary value in a predetermined range.

The incorporation unit 18 is a processing unit that incorporates the serial number image generated by the pre-processing unit 17, at a position corresponding to the serial number region in the background image acquired from the original image data 2. Specifically, the incorporation unit 18 reads the background image data 3 from the storage unit 15, and incorporates the serial number image generated by the pre-processing unit 17 at a position corresponding to the serial number region indicated by the metadata of the background image data 3. Accordingly, the incorporation unit 18 generates, as the generated image data 5, an image of the paper currency including the serial number that is set by the serial number setting unit 16.

Here, when the serial number image is incorporated at the position corresponding to the serial number region in the background image, the incorporation unit 18 may incorporate the serial number image at a position deviated by a predetermined amount from the position corresponding to the serial number region. The positional deviation may be set in advance by the user, or a deviation amount may be randomly selected from among deviation amounts in a predetermined width that is set by the user.

Further, the incorporation unit 18 may adjust the incorporated image in the generated image data 5 to predetermined density. The density to be adjusted may be directly set by the user or may be arbitrarily set in a predetermined range.

The output unit 19 is a processing unit that outputs the generated image data 5 in which the serial number that is set by the serial number setting unit 16 and that is combined by the pre-processing unit 17 is associated with the incorporated image generated by the incorporation unit 18. Specifically, the output unit 19 associates the serial number that is set by the serial number setting unit 16 with the generated image data 5 that is generated by the incorporation unit 18, and outputs the generated image data 5.

The association of the serial number as described above may be performed by, for example, including the serial number in the the metadata of the generated image data 5 and adding the serial number to the generated image data 5, or by using table data (array data) in which the generated image data 5 and the serial number are arranged in each row. The output unit 19 stores the generated image data 5 that is associated as described above in the storage unit 15. With this configuration, the user is able to read the generated image data 5 associated with the serial number from the storage unit 15, and use the generated image data 5 for development of a paper currency identification apparatus or the like.

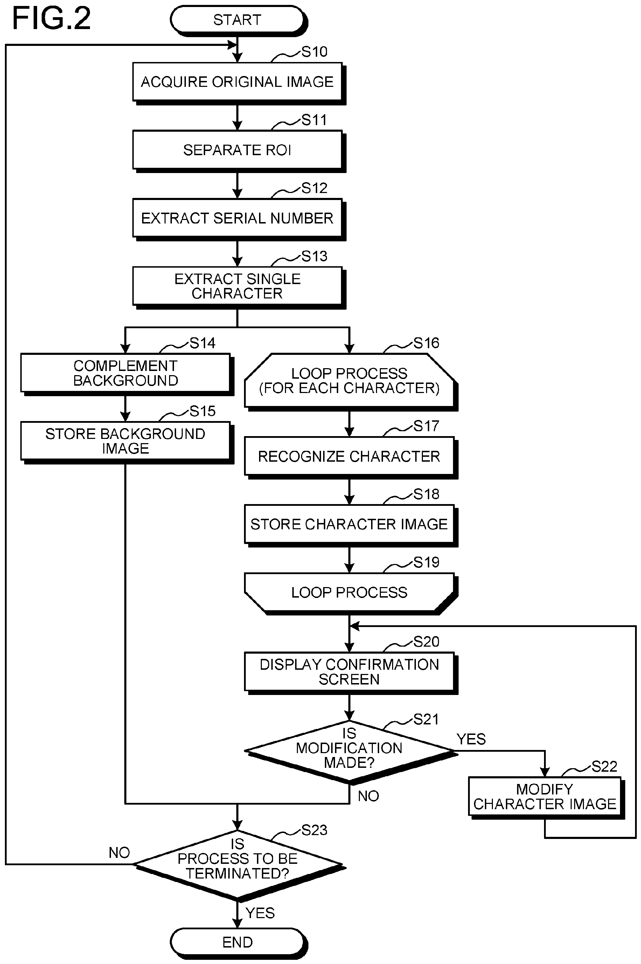

FIG. 2 is a flowchart illustrating an example of operation performed by the data generation apparatus 1 according to the embodiment. Specifically, FIG. 2 is a flowchart illustrating an example of a process of acquiring the background image data 3 and the character image data 4 from the original image data 2.

As illustrated in FIG. 2, if the process is started, the acquisition unit 10 acquires an original image related to a paper currency including a serial number from the original image data 2 (S10). Subsequently, the separation unit 11 separates a region of a serial as a region of interest (ROI) from the acquired original image (S11), and extracts a serial number region (S12).

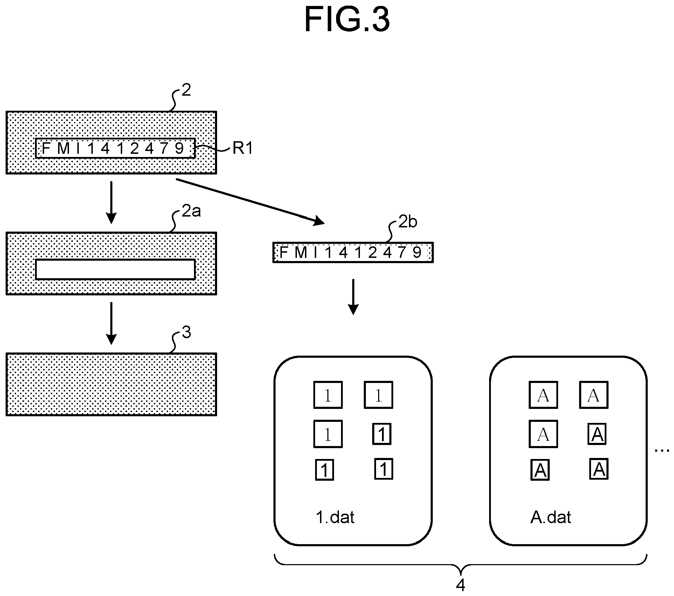

FIG. 3 is an explanatory diagram for explaining acquisition of the background image data 3 and the character image data 4 from the original image data 2. As illustrated in FIG. 3, the separation unit 11 extracts a region of interest R1 corresponding to the serial number in the original image data 2, and separates a background region 2a and a serial number region 2b.

Subsequently, the character image acquisition unit 13 identifies each of characters included in the separated serial number region 2b by a well-known character identification process, and extracts a character image of each of the characters (S13).

Further, in parallel to the process performed by the character image acquisition unit 13, the background image acquisition unit 12 complements a portion corresponding to the separated serial number region 2b in the separated background region 2a (S14). Subsequently, the background image acquisition unit 12 stores the complemented background image as the background image data 3 in the storage unit 15 (S15).

Following Step S13, the character image acquisition unit 13 performs a loop process (S16 to S19) for each of the extracted characters (character images). Specifically, the character image acquisition unit 13 performs character recognition on the extracted character image (S17), and stores a character image in the character image data 4 corresponding to the recognized character in the storage unit 15 (S18). Accordingly, as illustrated in FIG. 3 for example, the character image data 4 that includes "1.dat" including character images that are identified as characters of "1" and "A.dat" including character images that are identified as characters of "A" is stored in the storage unit 15.

Subsequently, the confirmation processing unit 14 displays a confirmation screen of the character image of each of the characters identified by the character image acquisition unit 13 (S20). Then, the confirmation processing unit 14 determines whether or not modification is made by the user (S21), and if modification is not made (S21: No), the process goes to S23. If modification is made (S21: Yes), the confirmation processing unit 14 modifies the character image corresponding to the identified character on the basis of a modification instruction received from the user (S22), and the process is returned to S20.

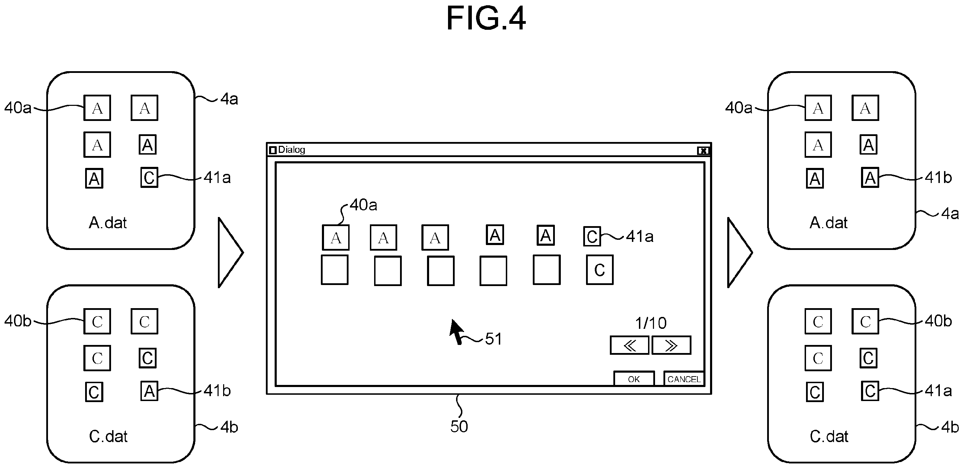

FIG. 4 is an explanatory diagram for explaining modification in the confirmation screen. In FIG. 4, character image data 4a includes one-character images 40a and 41a that are identified as "A". Here, it is assumed that the one-character image 41a is a character image that is erroneously identified as "A", and is a character image that needs to be identified as "C". Similarly, character image data 4b includes one-character images 40b and 41b that are identified as "C". Here, it is assumed that the one-character image 41b is a character image that is erroneously identified as "C", and is a character image that needs to be identified as "A".

As illustrated in FIG. 4, the confirmation processing unit 14 reads the character images (40a and 41a) included in the character image data 4a and displays the character images on a confirmation screen 50 with respect to the character "A", for example. Accordingly, the user is able to easily confirm whether the character images are correctly identified with respect to the character "A". Here, the one-character image 41a that needs to be identified as "C" is included; therefore, the user selects the one-character image 41a and designates that the one-character image 41a is "C" by inputting a character, for example. The confirmation processing unit 14 moves the one-character image 41a to the character image data 4b for "C" on the basis of the modification instruction.

Similarly, the character images (40b and 41b) included in the character image data 4b are read and displayed on the confirmation screen 50 with respect to the character "C", for example. Accordingly, the user is able to easily confirm whether the character images are correctly identified with respect to the character "C". Here, the one-character image 41b that needs to be identified as "A" is included; therefore, the user selects the one-character image 41b and designates that the one-character image 41b is "A" by inputting a character, for example. The confirmation processing unit 14 moves the one-character image 41b to the character image data 4b for "A" on the basis of the modification instruction.

Referring back to FIG. 2, at S23, the acquisition unit 10 determines whether a predetermined termination condition is met and the process is to be terminated (S23). If the process is not to be terminated (S23: No), the acquisition unit 10 returns the process to S10. If the process is to be terminated (S23: Yes), the acquisition unit 10 terminates the process.

The termination condition may be whether the process on all pieces of the original image data 2 that are prepared in advance is completed, or whether the process on a predetermined number of pieces of the original image data 2 is completed. Further, the termination condition may be whether the character image data 4 of all kinds of characters, such as alphanumeric characters including A to Z and 0 to 1 and Japanese characters including Hiragana, is obtained, for example.

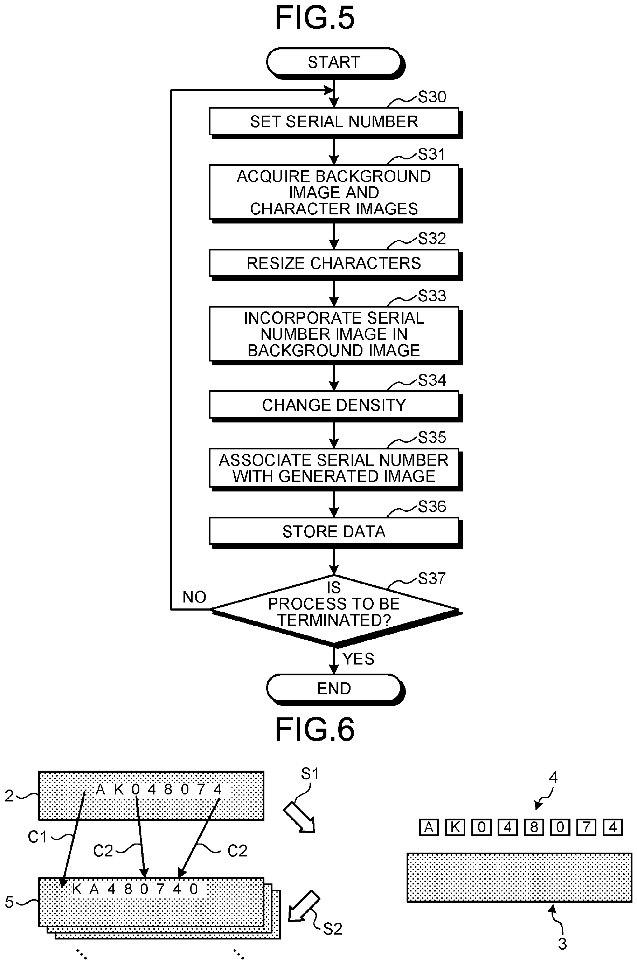

FIG. 5 is a flowchart illustrating an example of operation performed by the data generation apparatus according to the embodiment. Specifically, FIG. 5 is a flowchart illustrating one example of a process of generating the generated image data 5.

As illustrated in FIG. 5, if the process is started, the serial number setting unit 16 randomly sets a serial number based on a rule related to generation of the serial number, for example (S30).

Subsequently, the pre-processing unit 17 acquires the background image from the background image data 3, and the character images related to the serial number that is set by the serial number setting unit 16 from the character image data 4 (S31). The pre-processing unit 17 outputs the acquired background image to the incorporation unit 18. Then, the pre-processing unit 17 resizes the acquired character image of each of the characters (S32). Subsequently, the pre-processing unit 17 generates a serial number image by rearranging the resized character images in the same order as the serial number, and outputs the serial number image to the incorporation unit 18.

Then, the incorporation unit 18 incorporates the serial number image generated by the pre-processing unit 17 at a position corresponding to the serial number region in the background image (S33), and changes density of the incorporated image (S34).

Subsequently, the output unit 19 associates the serial number that is set by the serial number setting unit 16 with the image (the generated image data 5) for which the density is changed and which is generated by the incorporation unit 18 (S35), and stores the associated generated image data 5 in the storage unit 15 (S36).

Then, the serial number setting unit 16 determines whether a predetermined termination condition is met and the process is to be terminated (S37). If the process is not to be terminated (S37: No), the serial number setting unit 16 returns the process to S30. If the process is to be terminated (S37: Yes), the serial number setting unit 16 terminates the process.

The termination condition may be whether a predetermined number (for example, 1000) of pieces of the generated image data 5 as set in advance by the user or the like are generated, or whether the generated image data 5 of a serial number that is designated in advance by the user is generated.

FIG. 6 is an explanatory diagram for explaining the generated image data 5 that is generated from the original image data 2. As illustrated in FIG. 6, through the processes at S10 to S23 as illustrated in FIG. 2 (S1), the data generation apparatus 1 is able to acquire, from the original image data 2, the background image data 3 and the character image data 4 of each of the characters included in the serial number of the original image data 2. Further, the data generation apparatus 1 is able to acquire a plurality of pieces of the generated image data 5 to each of which a serial number (correct answer) is added, by repeating the processes at S30 to S37 as illustrated in FIG. 5 (S2) on the basis of the character image data 4 and the background image data 3 that are acquired from the original image data 2.

Therefore, the user is able to omit operation of associating a serial number as a correct answer with sample data of a paper currency for each serial number, and is able to easily obtain an environment for checking identification accuracy and confirming an anti-counterfeiting effect of the paper currency identification apparatus.

Furthermore, each piece of the generated image data 5 is image data in which the position of the serial number is deviated relative to the original image data 2 (case C1) or image data in which the serial number is randomly rearranged (case C2). Therefore, it is possible to prepare data related to various kinds of paper currencies (serial numbers are deviated or serial numbers are randomly rearranged) for checking identification accuracy of the paper currency identification apparatus.

As described above, the data generation apparatus 1 includes the separation unit 11, the character image acquisition unit 13, the background image acquisition unit 12, the pre-processing unit 17, the incorporation unit 18, and the output unit 19. The separation unit 11 separates the serial number region 2b and the background region 2a in an original image of a paper currency that includes a serial number, with respect to the acquired original image data 2. The character image acquisition unit 13 identifies each of characters included in the separated serial number region 2b, and acquires a character image of each of the identified characters. The background image acquisition unit 12 acquires a background image by complementing the serial number region 2b in the separated background region 2a. The pre-processing unit 17 generates a serial number image by combining the acquired character images. The incorporation unit 18 incorporates the generated serial number image at a position corresponding to the serial number region 2b in the acquired background image. The output unit 19 outputs the generated image data 5 in which the serial number that is combined by the pre-processing unit 17 is associated with an incorporated image that is generated by the incorporation unit 18.

Therefore, the user is able to easily obtain image data (the generated image data 5) of the paper currency that is associated with the serial number. For example, the user is able to omit operation of associating a serial number as a correct answer with sample data of a paper currency for each serial number to obtain an environment for checking identification accuracy and confirming an anti-counterfeit effect of the paper currency identification apparatus. In this manner, the data generation apparatus 1 is able to support operation of developing the paper currency identification apparatus.

Furthermore, the data generation apparatus 1 further includes the confirmation processing unit 14 that displays the confirmation screen 50 for the character image of each of the identified characters and modifies the character image corresponding to the identified character based on a modification instruction that is received in the confirmation screen 50 from a user. With this configuration, the data generation apparatus 1 is able to check whether the character image that is identified and obtained from the original image is correctly identified, and is able to perform modification to obtain a correct content if the character image is erroneously identified.

Moreover, the pre-processing unit 17 generates an arbitrary serial number image by arbitrarily combining the acquired character images. With this configuration, the user is able to easily obtain image data (the generated image data 5) of a paper currency that is associated with the arbitrary serial number.

Furthermore, the pre-processing unit 17 and the incorporation unit 18 repeat the processes a plurality of number of times and generate a plurality of images in which arbitrary serial number images are incorporated. The output unit 19 outputs the generated image data 5 that is associated with an arbitrarily combined serial number, for each of the generated images. With this configuration, the user is able to easily obtain image data (the generated image data 5) of a plurality of paper currencies, each of which is associated with an arbitrary serial number.

Moreover, the pre-processing unit 17 resizes the acquired character images and combines the resized character images. With this configuration, the user is able to easily obtain image data (the generated image data 5) of a paper currency including a serial number for which sizes of the characters are adjusted by the resize.

Furthermore, the incorporation unit 18 adjusts density of the incorporated image to predetermined density. With this configuration, the user is able to easily obtain image data (the generated image data 5) for which the density is adjusted to the predetermined density and which represents a paper currency that is associated with the serial number.

Moreover, the incorporation unit 18 incorporates the generated serial number image at a position that is deviated by a predetermined amount from a position corresponding to the serial number region 2b. With this configuration, the user is able to easily obtain image data (the generated image data 5) in which the position of the serial number is deviated and which represents a paper currency that is associated with the serial number.

Furthermore, it is possible to generate a data generation program (hereinafter, referred to as a program) in which the processes that are performed by the data generation apparatus 1 described in the above embodiment are written in a language that is executable by a computer. For example, it may be possible to generate a program in which the processes that are performed by the data generation apparatus 1 are written in a language that is executable by the computer. In this case, it is possible to achieve the same effects as the embodiment as described above by causing the computer to execute the program. Moreover, it may be possible to record the program in a computer readable recording medium, and cause the computer to read and execute the program that is recorded in the recording medium to implement the same processes as those of the embodiment as described above. An example of a configuration of a computer that executes the program that implements the same functions as those of the data generation apparatus 1 will be described below as one example.

FIG. 7 is an explanatory diagram for explaining an example of the configuration of the computer. As illustrated in FIG. 7, a computer 1000 includes an operating unit 1100, a display 1200, and a communication unit 1300. Further, the computer 1000 includes a central processing unit (CPU) 1500, a read only memory (ROM) 1600, a hard disk drive (HDD) 1700, and a random access memory (RAM) 1800. All of the units as described above are connected to one another via a bus 1400.

The HDD 1700 stores therein, in advance, a program 1700a that implements the same functions as those of the acquisition unit 10, the separation unit 11, the background image acquisition unit 12, the character image acquisition unit 13, the confirmation processing unit 14, the serial number setting unit 16, the pre-processing unit 17, the incorporation unit 18, and the output unit 19 of the embodiment as described above. The program 1700a may be appropriately integrated or disintegrated, similarly to each of the components of the acquisition unit 10, the separation unit 11, the background image acquisition unit 12, the character image acquisition unit 13, the confirmation processing unit 14, the serial number setting unit 16, the pre-processing unit 17, the incorporation unit 18, and the output unit 19. In other words, as for each piece of data stored in the HDD 1700, all pieces of the data need not always be stored in the HDD 1700, but it is sufficient to store data needed for a process in the HDD 1700.

Furthermore, the CPU 1500 reads the program 1700a from the HDD 1700 and loads the program 1700a onto the RAM 1800. Accordingly, the program 1700a functions as a process 1800a. The process 1800a appropriately loads various kinds of data that are read from the HDD 1700 onto a region that is allocated to the process 1800a in the RAM 1800, and performs various processes based on the various kinds of loaded data. Specifically, the process 1800a performs the same processes as those of the acquisition unit 10, the separation unit 11, the background image acquisition unit 12, the character image acquisition unit 13, the confirmation processing unit 14, the serial number setting unit 16, the pre-processing unit 17, the incorporation unit 18, and the output unit 19, with respect to the original image data 2 that is input via the communication unit 1300. Moreover, the HDD 1700 implements the same functions as those of the storage unit 15, and stores therein the generated background image data 3, the generated character image data 4, and the generated image data 5.

Meanwhile, the program 1700a as described above need not always be stored in the HDD 1700 or the ROM 1600 from the beginning. For example, the program 1700a may be stored in a portable physical medium, such as a flexible disk, that is, FD, a compact disc-ROM (CD-ROM), a digital versatile disk (DVD), a magneto-optical disk, or an integrated circuit (IC) card, that is inserted into the computer 1000. Furthermore, the computer 1000 may acquire the program 1700a from the portable physical medium and execute the program 1700a. Moreover, the program 1700a may be stored in a different computer, a server apparatus, or the like that is connected to the computer 1000 via a public line, the Internet, a local area network (LAN), a wide area network (WAN), or the like, and the computer 1000 may acquire and execute the program 1700a. Meanwhile, if the process is terminated in the middle of the process in each of the processes of the embodiment as described above, it may be possible to perform a different process without terminating the process 1800a. Reference Signs List

- 1: data generation apparatus
- 2: original image data
- 2a: background region
- 2b: serial number region
- 3: background image data
- 4, 4a, 4b: character image data
- 5: generated image data
- 10: acquisition unit
- 11: separation unit
- 12: background image acquisition unit
- 13: character image acquisition unit
- 14: confirmation processing unit
- 15: storage unit
- 16: serial number setting unit
- 17: pre-processing unit
- 18: incorporation unit
- 19: output unit
- 40a, 40b, 41a, 41b: one-character image
- 50: confirmation screen
- 51: cursor
- 1000: computer
- 1100: operating unit
- 1200: display
- 1300: communication unit
- 1400: bus
- 1500: CPU
- 1600: ROM
- 1700: HDD
- 1700a: program
- 1800: RAM
- 1800a: process
- C1, C2: case
- R1: region of interest

## Claims

1. A data generation apparatus comprising:
a separation unit that separates a serial number region and a background region from an original image of a paper currency that includes a serial number;
a character image acquisition unit that identifies each of characters included in the separated serial number region, and acquires a character image of each of the identified characters;
a background image acquisition unit that acquires a background image by complementing the serial number region in the separated background region;
a pre-processing unit that generates a serial number image by combining the acquired character images;
an incorporation unit that incorporates the generated serial number image at a position corresponding to the serial number image in the acquired background image; and
an output unit that outputs image data in which the serial number that is combined by the pre-processing unit is associated with an incorporated image that is generated by the incorporation unit.

2. The data generation apparatus according to claim 1, further comprising:
a confirmation processing unit that displays a confirmation screen for the character image of each of the identified characters and modifies the character image corresponding to the identified character based on a modification instruction that is received in the confirmation screen from a user.

3. The data generation apparatus according to claim 1, wherein the pre-processing unit generates an arbitrary serial number image by arbitrarily combining the acquired character images.

4. The data generation apparatus according to claim 3, wherein
the pre-processing unit and the incorporation unit repeat processes a plurality of number of times and generate a plurality of images in which arbitrary serial number images are incorporated, and
the output unit outputs the image data that is associated with an arbitrarily combined serial number, for each of the generated images.

5. The data generation apparatus according to claim 1, wherein the pre-processing unit resizes the acquired character images and combines the resized character images.

6. The data generation apparatus according to claim 1, wherein the incorporation unit adjusts density of the incorporated image to predetermined density.

7. The data generation apparatus according to claim 1, wherein the incorporation unit incorporates the generated serial number image at a position that is deviated by a predetermined amount from a position corresponding to the serial number region.

8. A data generation method implemented by a computer, the data generation method comprising:
separating a serial number region and a background region from an original image of a paper currency that includes a serial number;
identifying each of characters included in the separated serial number region;
acquiring a character image of each of the identified characters;
acquiring a background image by complementing the serial number region in the separated background region;
generating a serial number image by combining the acquired character images;
incorporating the generated serial number image at a position corresponding to the serial number image in the acquired background image; and
outputting image data in which the combined serial number is associated with an incorporated image.

9. A data generation program that causes a computer to execute a process, the process comprising:
separating a serial number region and a background region from an original image of a paper currency that includes a serial number;
identifying each of characters included in the separated serial number region;
acquiring a character image of each of the identified characters;
acquiring a background image by complementing the serial number region in the separated background region;
generating a serial number image by combining the acquired character images;
incorporating the generated serial number image at a position corresponding to the serial number image in the acquired background image; and
outputting image data in which the combined serial number is associated with an incorporated image.
